# EUROPEAN PATENT SPECIFICATION

(11) **EP 1 340 831 B1**
(45) Date of publication and mention of the grant of the patent: **03.01.2007**
(21) Application number: 03251217.0
(22) Date of filing: 28.02.2003
(51) Int. Cl.: C22C 38/40, B23K 35/30

(54) **Welding steel for enhancing welded joint strength**
Stahl zum Schweissen von hochfesten Verbindungen
Acier pour soudage ayant un joint à haute résistance

(30) Priority: 01.03.2002 JP 2002056288
(43) Date of publication of application: 03.09.2003
(73) Proprietor: National Institute for Materials Science, Tsukuba-shi, Ibaraki (JP)
(72) Inventor: Ohta, Akihiko, 2-1,Sengen 1-Chome, Tsukuba-shi, Ibaraki (JP); Suzuki, Naoyuki, 2-1,Sengen 1-Chome, Tsukuba-shi, Ibaraki (JP); Maeda, Yoshio, 2-1,Sengen 1-Chome, Tsukuba-ahi, Ibaraki (JP)
(74) Representative: Calamita, Roberto

(56) References cited:
- EP-A- 0 586 704
- EP-A- 0 850 719
- EP-A- 1 108 495
- US-A- 3 690 869
- PATENT ABSTRACTS OF JAPAN vol. 014, no. 236 (C-0720), 18 May 1990 (1990-05-18) & JP 02 061035 A (KOBE STEEL LTD), 1 March 1990 (1990-03-01)

## Description

The present patent relates to a welding process using welding materials for enhancing strength of welded joints and, more particularly, pertains to a welding process using welding material for welding or repair welding particularly for preventing of reduction of joint strength by softening of a part susceptible to welding heat, improvement of welding fatigue strength of weldments, prevention of weld crack or the like.

Heretofore, in order to prevent a part of a base material which is susceptible to welding heat from being softened by such welding heat, it has been considered necessary to adjust a composition of a base material alloy or to reduce heat input. Further, since welding material is shrunk as a welded part is cooled, tensile residual stress is induced in the welded part whereby fatigue strength of the welded part is remarkably reduced or a weld crack is induced. This has been a problem, which cannot be avoided.

In order to solve the problem of prior art, the present inventors have made it possible to enhance the joint strength up to a same level as in the base material by preventing tensile breaking started at a softened section of a welding heat-susceptible part through introducing compressive residual stress in a heat susceptible part and making use of restraining effect by a welding high-strength metal without using techniques, which have conventionally been considered necessary, of adjusting base material alloy components or reducing welding heat input. Further, as for an improved new method, for welding, which is effective for improving the fatigue strength at the welded part or preventing the weld crack, the present inventors have proposed a method (Japanese Patent No. 3010211) of performing a carbonic acid gas shield arc welding by using a welding material in which martensite transformation expansion is terminated at room temperature or a temperature in the vicinity thereof at which welding is completed. In this method, residual stress in the neighborhood of a weld toe can easily be suppressed by allowing the welded metal to penetrate deeply in a base material, thereby enhancing fatigue strength of the welded part and also facilitating the prevention of the weld crack.

However, as for such new welding material which will enhance the weld strength, there remains a room of further improvements for allowing it to be a general-purpose welding material with which gas shielded are welding using only carbon dioxide gas is performed in, for example, welding of joints with good efficiency under such conditions as high currency, high voltage and high-speed welding.

Under these circumstances, it is an object of the present invention to improve such a low transformation temperature welding material, which the present inventors have proposed as described above, and to provide a general-purpose new welding material.

In order to solve the above-described problems, the invention provides a process as given in claim 1. Preferred embodiments are given in the dependent claims. The process introduces a compressive residual stress in the neighborhood of a welded part enhances a welded joint strength by transformation expansion.
FIG. 1 is a photograph of appearance illustrating a tensile broken part of a butt-welded joint when a welding material is used according to the invention;
FIG. 2 shows a hardness distribution in the vicinity of a welded part in the case of FIG. 1;
FIG. 3 shows a residual stress distribution in the vicinity of a welded part in the case of FIG. 1;
FIG. 4 is a photograph of appearance illustrating a tensile broken part of a butt-welded joint when a commercially available welding material is used;
FIG. 5 shows a hardness distribution in the vicinity of a welded part in the case of FIG. 4; and
FIG. 6 shows a residual stress distribution in the vicinity of a welded part in the case of FIG. 4.

Although the invention has these features, the welding material used according to the invention is capable of incorporating compressive welding residual stress into the welded part by making use of transformation expansion at normal temperature of the welding material and performing welding by making use of stress ratio effect thereof in which expansion breaking in the softened section of the welded part is prevented and deterioration of fatigue strength, or induction of the welding crack is also prevented.

In the welding material, which is, as described above, an improved version of the welding material, which the present inventors have proposed, martensite transformation is terminated at room temperature or at a temperature in the vicinity thereof at which the welding is completed. As for such materials, an iron-based alloy is characterized by containing Si in the range of from 0.6% by weight to 20% by weight.

Further, an alloy material comprising Ni and Cr is illustrated as a more favorable material.

Ordinarily, the iron-based alloy having such chemical composition (in weight percent) as Ni: 2 to 20, Cr: 2 to 20, C (carbon) : 0.5 or less, Si: 0.6 to 2.0, Mn: 2.0 or less and Mo: 0.5 or less is desirable. It goes without saying that 0.5 or less of Nb, Ti, A1, W, Ta, V, Hf, Zr or the like may optionally be added. However, a total ratio of metal elements exclusive of Ni and Cr is 5.0 or less and, particularly, P is desirably less than 0.02. By allowing a content of Si to be in the range of from 0.6% by weight to 2.0% by weight, as described above, it becomes possible that only CO₂(carbonic acid gas) which is low in cost is used as a shield gas and high strength joint welding and the like is performed by a high efficient operation. Using the method, which has been proposed by the present inventors, does not always easily perform these features. This is because that the method is not suitable for welding under conditions of high currency, high voltage and high speed welding.

Although it is permissible that the shield gas comprises only carbonic gas (C0₂) , the shield gas may optionally be mixed with an inert gas such Ar (argon) to be a mixed gas.

According to the invention, as described above, by using the welding material in which the martensite transformation is terminated in the vicinity of room temperature, it becomes possible to use the shield gas comprising only CO₂ gas, to conduct butt joint welding with high performance and to shift a breaking position into a side of the base material without causing such problem as breaking at a welding heat-susceptible part which was unable to a void whereupon base material strength can be secured even in a case of the welding joint. For example, joint strength at the welded part can be enhanced up to a high strength of from 800 MPa to 1200 MPa.

As described as, the invention can be applied to various types of steel material.

For example, it gives a remarkable effect in welding of superfine grain steel having a crystalline grain diameter of 3 µm or less.

Hereinafter, examples of performing butt joint welding by using the welding material according to the invention are given but should not be interpreted as limiting the invention in any way.

### EXAMPLE

As steel subjected to welding (base material) in the example described below, a superfine grain steel having a composition (in weight percent) of: C: 0.092/Si: 0.31/Mn: 1.46/P: 0.010/S: 0.001/Al:0.030/N:0.0015/Nb:0.019/Ti: 0.007/Fe: balance was used.

### <1> Butt-welding was performed by gas shielded an arc welding method based on the above-described composition (weight percent) using the welding material according to the invention comprising an iron-based alloy containing:

C: 0.03
Si: 0.78
Mn: 1.94
Ni: 9.38
Cr: 9.31
Mo: 0.13,
and also using the shield gas containing 100% CO₂ under conditions of a flow rate of 251/min, 285A, 32V and welding speed of 25 cm/min.

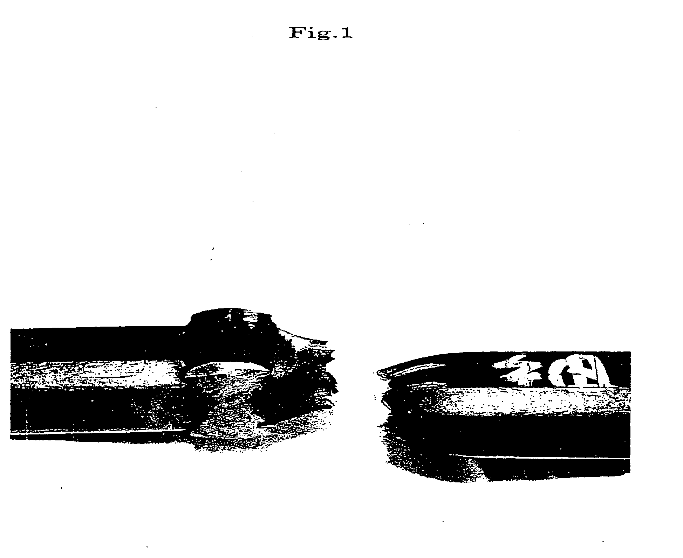

FIG. 1 is a photograph showing a state of breaking in which a test piece of butt-welded joint was subjected to tensile breaking. The photograph shows that a position in which the test piece was deformed, elongated and broken is away from a position of weld reinforcement.

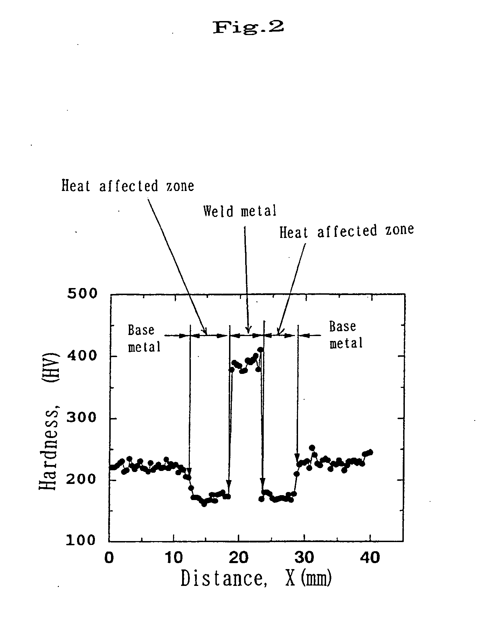

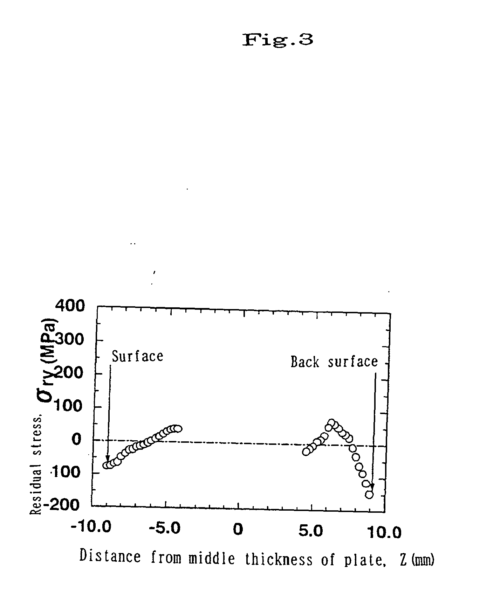

This indicates that, although the heat-affected zone is softened as seen from a hardness distribution as shown in FIG. 2, breaking from the softened section was prevented. In other words, as seen from a residual stress distribution as shown in FIG. 3, it is found that compressive residual stress was induced in the softened section in the welded part and the thus-induced residual stress works in a direction in which working tensile stress at the time of testing loaded in the softened section is lowered whereby breaking from the softened section was prevented but breaking occurred in a base material part having high strength.

In fact, tensile strength of the joint using the welding material according to the invention was 838 MPa which was same as that of the base material.

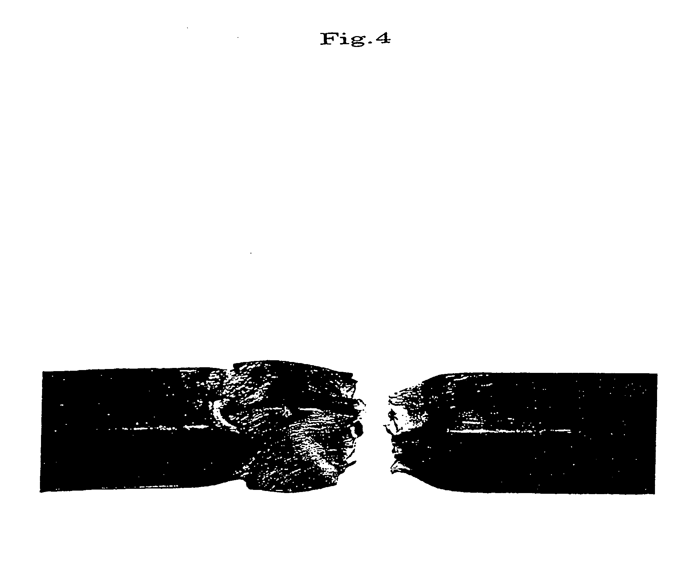

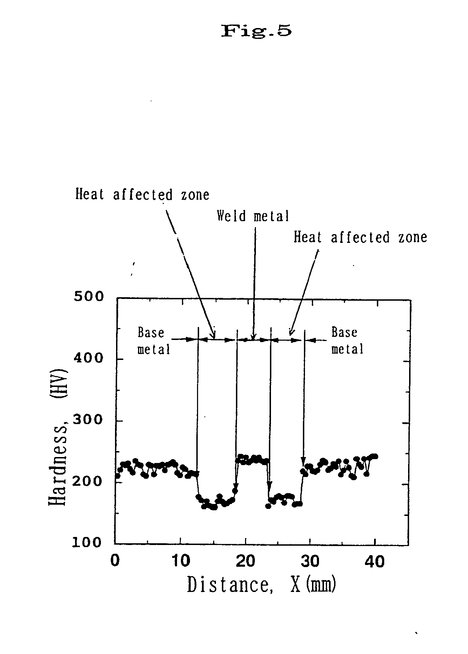

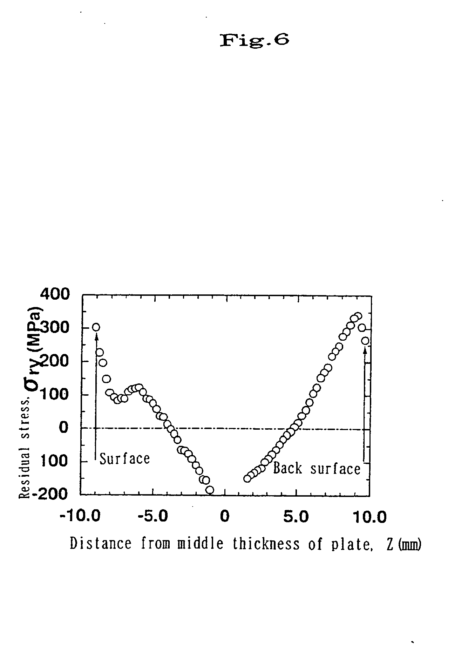

On the other hand, FIG. 4 shows a state of breaking in which a welded joint test piece which has been welded by using a commercially available welding material having a composition of: C: 0.09/Si: 0.32/Mn: 1.05/P: 0.008/S: 0.010/Ni: 2.71/Cr: 0.24/Mo: 0.49/Fe: balance under conditions of 320A, 31V and a welding speed of 25 cm/min was subjected to tensile breaking. In this case, a broken part coincided with the welding heat-susceptible part. A hardness distribution as shown in FIG. 5 indicates that the heat-affected zone is softened. In the case of this material, the welding material is analogous to the base material. In a residual stress distribution as shown in FIG. 6, tension was marked opposite to that of the welding material according to the invention. Therefore, the tensile residual stress is present in the heat-affected zone, which is low in strength and works in some way to heighten the working stress whereupon breaking occurred in the heat affected zone. In this case, the tensile strength was reduced to be 739 MPa.

### <2> Welding was performed on steel having a thickness of 2.4 mm in a same manner as described above except that welding conditions were changed to those shown in Table 1.

In the case of welding material containing 0.5 (weight per cent) or less of Si used in Japanese Patent No. 3010211, welding under conditions of 100% CO₂ gas, high currency, high voltage and high speed welding was not appropriate and the welding was unable to be executed under conditions shown in Table 1. Further, in the case of the above-described commercially available welding material, the welding was unable to be executed under conditions of high currency, high voltage and high welding speed.

Under these circumstances, it was confirmed that, according to the invention, high efficient welding was made possible under the conditions of 100% CO₂ shield gas.

**Table 1**

| Current | Voltage | Welding speed | Welding material | | |
|---|---|---|---|---|---|
| (A) | (V) | (cm/min) | Present invention | JP No. 3010211 | Commercially available welding material |
| 220 | 21 | 120 | impossible | impossible | possible |
| 220 | 23 | 120 | possible | impossible | possible |
| 220 | 23 | 200 | possible | impossible | impossible |
| 220 | 25 | 120 | possible | impossible | impossible |
| 275 | 28 | 200 | possible | impossible | impossible |

As described above in detail, by using the welding material according to the invention, breaking of the softened section of the welded part in, for example, a butt joint was prevented, weld strength by welding was enhanced and, further, high efficient welding was made possible to be performed by the arc welding shielded with only CO₂ gas which is low in cost under conditions of high currency, high voltage and a high welding speed.

## Claims

1. A welding process using a welding material which is an iron-based alloy consisting of: Si in the range of from 0.6 % to 2.0 % by weight, Ni of from 2 to 20 % by weight, Cr of from 2 to 20 % by weight, C of 0.5 % by weight or less, Mn of 2.0 % by weight or less, Mo of 0.5 % by weight or less, P and S of less than 0.02 % by weight, 0.5 % by weight or less of Al, W, Ta, V, Hf and Zr and balance iron and unavoidable impurities, wherein the total ratio of metal elements exclusive of Ni, Cr and iron is 5.0 % or less and wherein said alloy has a martensitic transformation which is terminated at room temperature or at a temperature in the vicinity of room temperature and has compressive stress in the weld joint.

2. A process as claimed in claim 1, wherein said welding is gas shielded arc welding using only CO₂ gas.

3. A process as claimed in claim 2, wherein said welding is butt-joint welding.

## Patentansprüche

1. Ein Schweißverfahren unter Verwendung eines Schweißmaterials, das eine eisenbasierte Legierung ist, mit:
Si in dem Bereich von 0,6 Gew.% bis 2,0 Gew.%, Ni von 2 bis 20 Gew.%, Cr von 2 bis 20 Gew.%, C von 0,5 Gew.% oder weniger, Mn von 2,0 Gew.% oder weniger, Mo von 0,5 Gew.% oder weniger, P und S von weniger als 0,02 Gew.%, 0,5 Gew.% oder weniger von Al, W, Ta, V, Hf und Zr und Ausgleich-Eisen und unvermeidbaren Unreinheiten, wobei das Gesamtverhältnis von Metallelementen mit Ausnahme von Ni, Cr und Eisen 5,0 % oder weniger ist und wobei die Legierung eine martensitische Transformation hat, die bei Raumtemperatur oder einer Temperatur in der Umgebung der Raumtemperatur beendet ist, und Druckspannung in der Schweißfuge hat.

2. Ein Verfahren nach Anspruch 1, wobei das Schweißen ein nur CO₂ Gas verwendendes Schutzgas- bzw. Schutzgaslichtbogenschweißen ist.

3. Ein Verfahren nach Anspruch 2, wobei das Schweißen ein Stoßverbindungsschweißen ist.

## Revendications

1. Un procédé de soudage utilisant un matériau de soudage qui est un alliage base-fer consistant en : Si allant de 0,6% à 2,0% en poids, Ni allant de 2% à 20% en poids, Cr allant de 2% à 20% en poids, C de 0,5% en poids ou moins, Mn de 2,0% en poids ou moins, Mo de 0,5% en poids ou moins, P et S moins de 0,02% en poids, 0,5% en poids ou moins de Al, W, Ta, V, Hf et Zr et le complément étant du fer et des impuretés inévitables, dans lequel le total d'éléments métalliques autres que Ni, Cr et fer est de 5,0% ou moins et dans lequel l'alliage a une transformation martensitique qui est terminée à la température ambiante ou au voisinage de la température ambiante et qui a des contraintes de compression dans le joint soudé.

2. Procédé selon la revendication 1, dans lequel ledit procédé de soudage est du soudage à l'arc sous protection gazeuse utilisant seulement du gaz CO₂.

3. Procédé selon la revendication 2, dans lequel le procédé de soudage est un soudage bout à bout.
